# EUROPÄISCHE PATENTANMELDUNG

(11) **EP 3 037 903 A1**
(43) Veröffentlichungstag der Anmeldung: **29.06.2016**
(21) Anmeldenummer: 14199688.4
(22) Anmeldetag: 22.12.2014
(51) Int. Cl.: G05B 19/416

(54) **Verfahren zum Betrieb eines technischen Systems, Steuerungsvorrichtung, Computerprogrammprodukt sowie ein technisches System**

(71) Anmelder: Siemens Aktiengesellschaft, 80333 München (DE)
(72) Erfinder: Kram, Raimund, 91056 Erlangen (DE); Ladra, Uwe, 91056 Erlangen (DE); Schäfers, Elmar, 90763 Fürth (DE); Wagner, Peter, 91217 Hersbruck (DE); Linke, Hartmut, 91056 Erlangen (DE)

(57) **Zusammenfassung**

Die Erfindung betrifft ein Verfahren zum Betrieb eines technischen Systems (TS), eine Vorrichtung und Verfahren zur Bestimmung eines Bewegungsprofils (1), Steuerungsvorrichtung sowie ein technisches System (TS) selbst. Dabei weist das technische System (TS) zumindest einen Antrieb (A) zur Bewegung zumindest einer Achse auf, wobei zumindest ein optimiertes Bewegungsprofil (1) der Achse mit Hilfe eines Optimierungsverfahrens (Opt) berechnet wird, wobei das Optimierungsverfahren (Opt) das optimierte Bewegungsprofil (1) anhand von vorgegebenen Punkten eines Bewegungsprofils (1) und/oder vorgegebene Bereichen des Bewegungsprofils (1) berechnet wird. Zur vereinfachten und besonders anschaulichen Benutzung gehen in das Optimierungsverfahren (Opt) physikalische Randbedingungen (RB) von Beginn des Optimierungsverfahrens (Opt) ein. So wird die die Benutzung und Einrichtung des technischen Systems (TS) durch den Benutzer anschaulicher gestaltet. Das optimierte Bewegungsprofil (1) dient zur Steuerung des zumindest einen Antriebs (A) des technischen Systems (TS).

## Beschreibung

Die Erfindung betrifft ein Verfahren zum Betrieb eines technischen Systems, ein Computerprogrammprodukt, eine Steuerungsvorrichtung sowie ein technisches System.

Bei einem technischen Systems, beispielsweise einer Werkzeugmaschine, einer Produktionsmaschine oder einem Roboter hängen Bewegungsprofile eines Maschinenelements von einem Bewegungsprofil eines weiteren Maschinenelements ab.

DE 10 2005 027 437 A1 betrifft ein Verfahren und eine Steuereinrichtung zur Bewegungsführung eines bewegbaren Maschinenelements einer Maschine, wobei eine Bestimmung eines Bewegungsprofils mit Hilfe eines Optimierungskriteriums erfolgt.

DE 10 65 422 A1 beschreibt ein Verfahren und eine Steuerung zur Optimierung flexibler, hochwertiger Kurvenscheibenfunktionen über ein Steuerprogramm bzw. Anwendungsprogramm, wobei die Kurvenscheibenfunktion abschnittweise beschriebe wird und die nicht vorgegebenen Segmente interpoliert wird.

Nachteilig am Stand der Technik ist die Abstrakte und umständliche Erstellung eines Bewegungsprofils, insbesondere einer Kurvenscheibenfunktion.

Daher ist es Aufgabe der Erfindung, ein technisches System möglichst effizient zu betreiben, insbesondere durch eine vereinfachte Erstellung bzw. Optimierung eines Bewegungsprofils.

Diese Aufgabe wird durch ein Verfahren gemäß Anspruch 1 gelöst.

Die Aufgabe wird weiter mit einer Vorrichtung zur Bestimmung eines Bewegungsprofils gemäß Anspruch 11 gelöst.

Diese Aufgabe wird weiter durch eine Steuerungsvorrichtung gemäß Anspruch 12 gelöst.

Diese Aufgabe wird zudem durch ein technisches System gemäß Anspruch 14 gelöst.

Diese Aufgabe wird weiter durch ein Computerprogrammprodukt gemäß Anspruch 15 gelöst.

Zur Lösung der Aufgabe dient ein Verfahren zum Betrieb eines technischen Systems, wobei das technische System zumindest einen Antrieb zur Bewegung zumindest einer Achse aufweist, wobei zumindest ein optimiertes Bewegungsprofil der Achse mit Hilfe eines Optimierungsverfahrens berechnet wird, wobei das Optimierungsverfahren das optimierte Bewegungsprofil anhand von vorgegebenen Punkten eines Bewegungsprofils und/oder vorgegebene Bereichen des Bewegungsprofils berechnet wird. Das Verfahren ist dadurch gekennzeichnet, dass in das Optimierungsverfahren physikalische Randbedingungen eingehen und dass das optimierte Bewegungsprofil zur Steuerung des zumindest einen Antriebs des technischen Systems dient.

Das Verfahren zum Betreib eines technischen Systems kann ein Verfahren zur Optimierung, Berechnung und/oder Bereitstellung von Bewegungsprofilen, insbesondere von Kurvenscheibenfunktionen aufweisen. Ein Bewegungsprofil kann insbesondere eine Kurvenscheibenfunktion sein.

Ein technisches System kann eine Werkzeugmaschine, eine Produktionsmaschine, eine Produktionsanlage zur Herstellung eines Grundstoffes oder einen (komplexen) Erzeugnisses, ein Roboter, eine Parallelkinematik, eine Druckmaschine, eine Textilmaschine, eine Zuschneidemaschine oder ein Kran sein. Unter einer Achse ist entweder eine reale Achse als Teil des technischen Systems oder eine virtuelle Achse zu verstehen.

Unter einer Achse oder einem Achsenverbund kann auch eine Master-Achse in Verbindung mit einer nachgeführten (Slave-) Achse verstanden sein.

Unter einer Bewegung einer Achse wird eine Rotationsbewegung einer Achse oder einer Translativbewegung einer Achse oder eines Aktors verstanden.

Unter einem Bewegungsprofil wird eine Vorschrift verstanden, mit welcher Geschwindigkeit, Drehzahl, und/oder (Dreh-)Moment ein Antrieb, insbesondere eines technischen Systems, sich zu einem bestimmten Zeitpunkt und/oder bei einer bestimmten Position und/oder Ausrichtung bewegt bzw. dreht. Ein Bewegungsprofil kann ein Geschwindigkeitsverlauf als Funktion einer Position, einer Zeit und/ oder einer Ausrichtung bzw. eines Drehwinkels sein. Das Bewegungsprofil kann, zumindest teilweise, von einem Benutzer vorgegeben sein.

Bewegungsprofile für unterschiedliche Antriebe, insbesondere eines technischen Systems, können von einem anderen oder von mehreren anderen Bewegungsprofilen abhängig sein.

Oft wird ein Bewegungsprofil mit Hilfe eines Computerprogramms erstellt. Dabei können Bewegungsprofile auch im Hinblick auf die vorgesehene Anwendung optimiert werden. Eine Optimierung eines Bewegungsprofils erfolgt mit Hilfe des Optimierungsverfahrens. Mit Hilfe des Optimierungsverfahrens kann ein Bewegungsprofil anhand von Vorgaben erstellt und/oder optimiert werden.

Ein Optimierungsverfahren kann ein Bewegungsprofil in ein optimiertes Bewegungsprofil überführen. Dabei wird das Bewegungsprofil beispielsweise an ein anderes (optimiertes) Bewegungsprofil angepasst. Ein Bewegungsprofil kann auch anhand von Vorgaben mit Hilfe des Optimierungsverfahrens ergänzt werden.

Unter einem Optimierungsverfahren wird eine Rechenvorschrift verstanden, welche eine Funktion oder eine Schar von Werten in eine andere Funktion oder eine andere Schar von Werten umwandelt. Nach der Umwandlung ist oft eine Eigenschaft der Funktion oder der Schar der Werte verändert, dergestalt, dass ein zugeordnetes Maß, das der Funktion zugeordnet werden kann, verändert ist. Das zugeordnete Maß entspricht in der Regel dem Grad der optimalen Anpassung des Bewegungsprofils an ein optimales Bewegungsprofil.

Unter physikalischen Randbedingungen werden Bedingungen verstanden, welche das optimierte Bewegungsprofil erfüllen muss. Beispielsweise kann eine Randbedingung eine Begrenzung zumindest einer Ableitung des Bewegungsprofils nach einer Zeit oder einer Position sein.

Insbesondere ist eine physikalische Randbedingung eine minimale/maximale Geschwindigkeit eines Antriebs, ein minimales/maximales Drehmoment, ein maximaler Ruck (Ableitung der Beschleunigung nach der Zeit bzw. zeitliche Änderung einer Kraft / eines Drehmoments), eine maximale Krafteinwirkung des Antriebes auf ein Element des technischen Systems, eine maximale Beschleunigung, eine begrenzte Laufzeit eines Antriebs des technischen Systems und/oder eine begrenzte Entwicklung von Wärme von einem Antrieb des technischen Systems.

Unter einem Antrieb wird allgemein eine elektrische Maschine, ein (Elektro-)Motor, ein Linearmotor, ein Servomotor oder ein Piezoelement verstanden.

In einer Anwendung kann ein (nicht vollständig festgelegtes) Bewegungsprofil vorgegeben sein. Mittels des Verfahrens zum Betrieb des technischen Systems wird ein optimiertes Bewegungsprofil ermittelt. Das optimierte Bewegungsprofil wird mit Hilfe des Optimierungsverfahrens aus dem (vorgegebenen, nicht vollständig festgelegten) Bewegungsprofil erstellt. Bei der Optimierung des Bewegungsprofils werden unmittelbar die physikalischen Randbedingungen beachtet. Die Berechnung eines Bewegungsprofils erfolgt zumeist mit Hilfe eines Computerprogrammes, insbesondere eines Engineering-Programms. Vorteilhaft kann das Bewegungsprofil auch auf der Steuerungsvorrichtung des technischen Systems ermittelt und/oder mit Hilfe des Optimierungsverfahrens optimiert werden.

Eine Optimierung des Bewegungsprofils kann nach unterschiedlichen Zielvorgaben erfolgen. Eine Zielvorgabe kann durch eine Minimierung zumindest einer Ableitung des Bewegungsprofils nach der Position/Zeit vorgegeben sein. Eine Optimierung kann auch durch eine Minimierung/Maximierung eines Integrals des Bewegungsprofils und/oder zumindest eine seiner Ableitungen erfolgen.

Als Optimierungsverfahren dienen vorzugsweise herkömmliche, bekannte Optimierungsverfahren.

Die Betrachtung der physikalischen Randbedingungen erfolgt während zumindest eines Schrittes, vorzugsweise jeden Schrittes, des Optimierungsverfahrens. Eine nachgelagerte Überprüfung eines optimierten Bewegungsprofils, beispielsweise durch ein CAM-Tool/CAM-System, entfällt daher.

Die erfindungsgemäße Ausgestaltung ist deutlich einfacher, schneller und zielführender durchführbar als die bisher vorliegende Lösung, bei der ein optimiertes Bewegungsprofil, insbesondere mit Hilfe eines CAM-Tools, in eine maschinenlesbare Sprache übertragen worden ist und dort auf die physikalischen Randbedingungen hin überprüft worden ist und so ggf. erst mehrere Optimierungsdurchgänge zwischen der Optimierung des Bewegungsprofils und der Überprüfung anhand der physikalischen Randbedingungen zur Erstellung eines geeigneten Bewegungsprofils durchlaufen werden mussten.

In einer vorteilhaften Ausgestaltung wird das Optimierungsverfahren das Bewegungsprofil zur Minimierung eines Energieverbrauchs des zumindest einem elektrischen Antriebs, zur Minimierung einer Zeit für einen Durchlauf des Bewegungsprofils und/oder zur Verminderung von Schwingungen in dem technischen System ausgerichtet.

Ein Bewegungsprofil kann, insbesondere bei Kenntnis der technischen Daten des Antriebes, auf einen Wert des Energieverbrauchs abgebildet werden, d.h. dem Bewegungsprofil wird ein Energieverbrauch zugeordnet. Durch Beachtung/Zuordnung dieser Abbildung kann die Minimierung des Energieverbrauchs des Antriebes und/oder des technischen Systems minimiert werden.

Ein Bewegungsprofil kann auch dergestalt optimiert werden, dass die Zeit, welche der Antrieb für die Durchführung der Vorgaben aus dem Bewegungsprofils benötigt, minimiert werden.

Ein Bewegungsprofil kann ebenfalls zur Minimierung von Schwingungen in dem technischen System hin optimiert werden. Zur Minimierung kann die Fourier-Transformierte des Bewegungsprofils, insbesondere unter Berücksichtigung der physikalischen Eigenschaften des technischen Systems bzw. der Antriebe dergestalt optimiert werden, dass in bestimmten Bereichen des transformierten Bewegungsprofils das transformierte Bewegungsprofil minimiert wird. Anstelle einer Fourier-Transformation kann auch eine andere Integraltransformation zur Übertragung des Bewegungsprofils in einen "Frequenzraum" verwendet werden.

Für die Optimierung des zumindest einen Bewegungsprofils können Optimierungsverfahren auch, zueinander gewichtet, gleichzeitig ablaufen und/oder nacheinander durchgeführt werden, wobei die physikalischen Randbedingungen entsprechend beachtet werden.

Die Optimierung anhand von speziellen Vorgaben wie der Verminderung des Energieverbrauchs kann, insbesondere bei einer Abstimmung mehrerer Bewegungsprofile untereinander. Das Verfahren zum Betrieb des technischen Systems kann hierdurch langlebiger und energieeffizienter betrieben werden. Insbesondere kann eine gewichtete Optimierungsfunktion als Lagrange-Funktion mit parametrierten Randbedingungen zur Optimierung herangezogen werden. Daneben sind auch weitere entsprechende Methoden dem Fachmann bekannt.

In einer weiteren wobei das technische System zumindest einen zweiten Antrieb zur Bewegung einer zweiten bewegbaren Achse aufweist.

Ein technisches System weist oft mehrere Antriebe auf, wobei die Antriebe zu einer Bewegung von Achsen des technischen Systems dienen. Falls eine Funktionsweise des technischen Systems unterschiedliche Achsen in ihrer Wirkung aufeinander abstimmt und/oder verknüpft, so wirkt sich dies auch auf die Vorgaben für die Bewegungsprofile für die einzelnen Antriebe aus.

Beispielsweise kann das technische System eine erste Achse, insbesondere eine Leitachse, und eine weitere Achse aufweisen, wobei sich an der Bewegung der ersten Achse (Leitachse) die Bewegung der zumindest einen weitere Achse orientiert. Dies heißt, dass das Bewegungsprofil den Antrieb der erste Achse gibt das Bewegungsprofil für den Antrieb der zweiten Achse vor.

Es kann auch eine abhängige Optimierung beider, voneinander abhängigen Bewegungsprofilen gemäß der, in diesem Dokument ausgeführten, Merkmale durchgeführt werden.

Eine Betrachtung mehrerer Achsen in einem technischen System erlaubt vorteilhaft einen Betrieb von mehreren Antrieben dergestalt, dass das technische System besonders energieeffizient und/oder besonders langlebig betrieben werden kann.

In einer weiteren vorteilhaften Ausgestaltung wird die zweite bewegbare Achse gemäß einem zweiten Bewegungsprofil bewegt, wobei das erste Bewegungsprofil und das zweite Bewegungsprofil miteinander verknüpft sind.

Die Verknüpfung von Bewegungsprofilen unterschiedlicher Antriebe ist weit verbreitet. Beispielsweise ist das Bewegungsprofil eines Antriebs von einem Bewegungsprofil eines anderen Antriebes abhängig. Hier kann als Beispiel ein elektronisches Leitsystem angeführt werden, wobei sich die Drehbewegung einer Achse an einer Drehbewegung einer anderen Achse ausrichtet. Beispielhaft für eine solche Abhängigkeit zweier oder mehrerer Bewegungsprofile ist eine Kurvenscheibenfunktion. Eine Möglichkeit der Erstellung einer solchen Kurvenscheibenfunktion ist beispielsweise in DE 100 654 22 A1 beschrieben.

Die Ausrichtung eines Bewegungsprofils von einem anderen Bewegungsprofil kann auch gemeinsam optimiert werden, wobei beide Bewegungsprofile in Abhängigkeit voneinander optimiert werden.

Durch die Anwendung der beschriebenen Methode zur Optimierung von Bewegungsprofilen kann eine technische Anlage in Vereinfachter Art und Weise Energie energieeffizient betrieben werden.

Bei einer weiteren vorteilhaften Ausgestaltung des Verfahrens wird für die erste Achse und die zumindest eine weitere Achse des technischen Systems jeweils ein optimiertes Bewegungsprofil berechnet.

Eine Berechnung eines Bewegungsprofils anhand von festen Vorgaben ist eine besonders zielführende Möglichkeit, ein Bewegungsprofil zu erstellen, mit dem ein Antrieb eines technischen Systems angesteuert werden soll. Insbesondere werden Kurvenscheiben derart berechnet.

Anhand eines vorgegebenen Bewegungsprofils zur Bewegung einer ersten Achse mittels eines ersten Antriebs wird das zweite Bewegungsprofil für die Bewegung der zweiten Achse mit Hilfe des zweiten Antriebs definiert. Mit anderen Worten kann die Bewegung einer zweiten Achse in Bezug zur Bewegung der ersten Achse definiert werden.

Nach der Optimierung des zweiten Bewegungsprofils ist es möglich, mit den hier genannten Merkmalen das erste Bewegungsprofil anhand des ersten Bewegungsprofils zu verändern bzw. zu optimieren.

Durch eine nachträgliche Optimierung unterschiedlicher Bewegungsprofile, insbesondere bei einer gleichzeitigen Beachtung physikalischer Randbedingungen, können einfach und schnell die Bewegungsprofile der einzelnen Achsen miteinander verflochten werden und die Energieeffizienz des technischen Systems ist vorteilhaft erhöht.

Bei einer vorteilhaften Ausgestaltung wird das Optimierungsverfahren in mehreren Durchläufen durchgeführt. Dabei wird aus einem vorgegebenen Bewegungsprofil ein optimiertes Bewegungsprofil berechnet. Vorteilhaft kann das Bewegungsprofil nach jedem Durchlauf des Optimierungsverfahrens durch eine Visualisierungseinrichtung des technischen Systems angezeigt werden.

Eine Optimierung eines Bewegungsprofils erfolgt oft in mehreren Durchgängen. Die Bewegungsprofile, welche aus einem solchen Durchgang entstammt, nähern sich in seiner Form dem optimierten Bewegungsprofil an. Dies ist in der Regel auch in einer Darstellung eines solchen Bewegungsprofils erkennbar. Bei einer hier beschriebenen Darstellung eines Verfahrens zur Optimierung eines Bewegungsprofils erkennt der Fachmann durch einen Vergleich der Schar von Bewegungsprofilen den Fortschritt der Optimierung und kann gegebenenfalls manuell in den Verlauf der Optimierung eingreifen, falls dies das Optimierungsverfahren zulässt.

Unter einer Visualisierungsvorrichtung wird ein Display, ein Drucker, ein Monitor, oder eine derartige Anzeige verstanden, die geeignet ist, Bewegungsprofile für einen Benutzer sichtbar zu machen.

Durch die Darstellung der Bewegungsprofile auf einer Visualisierungseinrichtung können Konvergenzprobleme im Laufe der Optimierung des Bewegungsprofils erkannt werden und ggf. die Optimierung, z. B. durch den Benutzer, abgeändert werden.

Bei einer weiteren vorteilhaften Ausgestaltung gehen zur Berechnung eines optimierten Bewegungsprofils anhand der Minimierung des Energieverbrauchs baulich bedingte Verlustparameter des Antriebs als Randbedingungen ein.

Unter Verlustparameter werden Wärmeverluste beim Betrieb des Antriebs, insbesondere durch die Erwärmung des Blechpaketes und der Wicklung, sowie Verluste des verwendeten Umrichters. Die Verluste können bei bekannten Spezifikationen des Antriebs und/oder des Umrichters können für unterschiedliche Betriebszustände und/oder Betriebszeiten bekannt sein. Die bekannten oder ermittelten Verlustparameter können auch durch mittels Sensoren ermittelte Verlustparameter aufgezeichnet, als Funktion der Zeit aufgezeichnet und/oder gespeichert werden.

Die ermittelten und/oder gespeicherten Verlustparameter können als weitere Angaben in das Optimierungsverfahren eingehen.

Die ermittelten Verluste bzw. Verlustparameter können auch auf einer Visualisierungseinheit angezeigt werden.

Vorteilhaft kann durch die Anzeige der Verlustparameter, insbesondere als Funktion der Zeit, vorzugsweise periodisch als Funktion der Eigenzeit, dem Benutzer Aufschluss über die Betriebsmodi geben, bei denen der Antrieb und/oder das technische System viel Energie verbraucht.

Insbesondere zur Darstellung auf der Visualisierungseinrichtung kann als Zeit die Systemzeit (das ist die im technischen System verwandte Zeit, insbesondere die Zeit, welche periodisch auf einen festen Wert gesetzt wird und dann wieder losläuft), eine oder eine weitere, insbesondere absolute Zeit, als Funktionsargument für die Anzeige dienen. Allgemein kann im Rahmen dieser Erfindung die vorstehend ausgeführten Zeiten Verwendung finden.

Zusätzlich zu den oben genannten physikalischen Randbedingungen, welche sich aus dem Aufbau des technischen Systems, insbesondere der Antriebe des technischen Systems ergibt. Beispielsweise kann der Verlust eines Antriebs aufgrund magnetischer Verluste im Blechpaket, oder Widerstandsverluste der Wicklungen ermittelt oder vorgegeben werden. Diese Werte können bei bekannten Typen der Antrieben durch Datensätze vorgegeben sein, durch Simulationen berechnet und/oder durch Sensoren während des Betriebs ermittelt werden.

Weiter können diese ermittelten Verlustparameter als Funktion einer Zeit, insbesondere der Eigenzeit des Bewegungsprofils, dargestellt werden und/oder mit dem Optimierungsverfahren mit optimiert werden.

Die Betrachtung der Energieeffizienz durch Verlustparameter als zu minimierender Anteil bei Erstellung des optimierten Bewegungsprofils trägt vorteilhaft zu einer besonders energieeffizienten und Antriebs-schonenden Betriebsweise des technischen Systems bei.

Bei einer weiteren vorteilhaften Ausgestaltung des Verfahrens erfolgt eine Darstellung der Verlustparameter auf der Visualisierungseinrichtung.

Die Darstellung der Verlustparameter erfolgt entweder als Funktion der Systemzeit oder in Abhängigkeit der Position bzw. Ausrichtung einer Achse. Vorteilhaft kann bei einem periodischen Bewegungsprofil eine Darstellung mehrerer Verlustparameter als Funktion einer Anzahl von Durchläufen der Bewegungsprofile zur Darstellung gebracht werden.

Insbesondere kann der Verlustparameter als Funktion einer Zeit abgespeichert werden und somit ein so genannter Trace erzeugt werden. Ein Trace ist eine Liste mit Zeitpunkten und zugeordneten Verlustparametern/Werten. Auch ein solcher Trace ist vorteilhaft auf der Visualisierungseinrichtung darstellbar.

Die Darstellung von Verlustparametern kann dem Entwickler und/oder Benutzer des technischen Systems besonders energieintensive Vorgänge erkennen und diese durch eine Veränderung der Funktionsweise des technischen Systems und einer Änderung der Betriebsweise des technischen Systems zur Einsparung von Energie ändern.

In einer vorteilhaften Ausgestaltung werden als Optimierungsverfahren ein Newton-Verfahren, ein SQP-Verfahren, ein Lagrange-Newton-Verfahren, ein Runge-Kutta-Verfahren und/oder ein Simplex-Verfahren verwendet.

Oft lässt sich das Problem der Optimierung des Bewegungsprofils anhand von (physikalischen) Randbedingungen und/oder weiteren Parametern, insbesondere Verlustparameter, auf das Auffinden einer Nullstelle einer Funktion umwandeln. Dies erfolgt hier mit Hilfe eines numerischen Verfahrens zur Bestimmung einer Nullstelle.

Auch falls eine solche Umwandlung aufgrund der Problemstellung nicht geeignet ist, kann mit den oben genannten Verfahren eine Minimierung einer Funktion erfolgen.

Weitere Möglichkeiten zum Auffinden eines optimierten Bewegungsprofils gemäß Vorgaben ist eine genetischer Algorithmus, oder andere generische Verfahren.

Den Einsatz der oben genannten Optimierungsverfahren ist aufgrund der Bekanntheit der Optimierungsverfahren, insbesondere zur Bestimmung einer Nullstelle, vorteilhaft. Somit können Konvergenzprobleme einer Optimierung des Bewegungsprofils wirksam unterbunden werden.

Die Vorrichtung zur Bestimmung eines Bewegungsprofils oder mehrerer, insbesondere miteinander verknüpfte, Bewegungsprofile weist vorteilhaft eine Recheneinheit, optional eine Visualisierungseinrichtung, zumindest eine Schnittstelle zur Verbindung mit einem Antrieb und/oder eine Schnittstelle zur Verbindung der Vorrichtung mit einem technischen Systems auf, wobei die Vorrichtung zur Durchführung eines Verfahrens nach einem der vorangehenden Ansprüchen vorgesehen ist.

Eine solche Vorrichtung kann Teil des technischen Systems sein. Eine solche Vorrichtung kann auch durch eine Recheneinheit mit einer Schnittstelle zur Verbindung mit dem technischen System sein. Auf der Recheneinheit ist vorteilhaft ein Computerprogramm installiert, welche nach Übertragung in den Speicher, insbesondere den Arbeitsspeicher, der Recheneinheit geladen wird und mit Hilfe eines Prozessors (CPU) der Recheneinheit ausgeführt wird.

Zur Bestimmung des einen Bewegungsprofils oder der mehreren Bewegungsprofile wird ein erfindungsgemäßes Verfahren zum Betrieb des technischen Systems verwendet.

Ein solches Computerprogramm kann auch ein Engineering-Programm sein. Ein Engineering-Programm dient vorteilhaft zur Vorgabe, Berechnung, Bearbeitung, Optimierung und Widergabe von zumindest einem Bewegungsprofil, insbesondere für Bewegungsprofile eines technischen Systems, vorzugsweise auch Kurvenscheibenfunktionen. Eis solches Computerprogramm kann auch ein, auf einer Speicherprogrammierbaren Steuerung (SPS) ablaufbares Programm/Computerprogramm sein.

Die Ausgestaltung der Lösung der oben genannten Aufgabe als Computerprogramm ermöglicht eine breite Anwendbarkeit und einen flexiblen Einsatz zum Betrieb eines hier beschriebenen technischen Systems.

Bei der Steuerungsvorrichtung für das technisches System ist die Steuerungsvorrichtung zur Berechnung eines optimierten Bewegungsprofils für eine bewegliche Achse oder mehrerer, insbesondere miteinander verknüpfte, optimierten Bewegungsprofile für mehrere bewegliche Achsen vorgesehen, wobei zur Berechnung des zumindest einen optimierten Bewegungsprofils zumindest ein Optimierungsverfahren vorgesehen ist, wobei das Optimierungsverfahren zur Berechnung des optimierte Bewegungsprofils anhand von vorgegebenen Punkten eines Bewegungsprofils und/oder vorgegebene Bereichen des Bewegungsprofils vorgesehen ist. Die Steuerungsvorrichtung ist dadurch gekennzeichnet, dass in das Optimierungsverfahren physikalische Randbedingungen eingehen und wobei das zumindest eine optimierte Bewegungsprofil zur Vorgabe der Bewegung zumindest einen Antriebes in einem technischen System vorgesehen ist.

Die Steuerungsvorrichtung kann beispielsweise durch eine vorhandene Steuerungsvorrichtung, insbesondere eine SPS, gegeben sein, wobei zur Bestimmung des zumindest einen Bewegungsprofils das erfindungsgemäße Verfahren zum Einsatz kommt. Die Steuerungsvorrichtung kann sowohl zur Bereitstellung oder Berechnung der Bewegungsprofile als auch zur Steuerung des technischen Systems dienen.

Eine solche Steuerungsvorrichtung kann beispielsweise eine SIMATIC oder SIMOTION der Siemens AG sein.

In einer vorteilhaften Ausgestaltung der Steuerungsvorrichtung ist das Optimierungsverfahren zur Optimierung des Bewegungsprofils
- zu einer Minimierung eines Energieverbrauchs eines zumindest einem elektrischen Antriebs,
- zur Minimierung einer Zeit für einen Durchlauf des Bewegungsprofils
- und/oder zur Verminderung von Schwingungen in einem technischen System vorgesehen.

Eine Optimierung des zumindest einen Bewegungsprofils erfolgt, wie vorstehend ausgeführt. Insbesondere ist die Steuerungsvorrichtung auch zur Durchführung eines Verfahrens gemäß Anspruch 1 geeignet. Die Steuerungsvorrichtung kann insbesondere zur Berechnung und/oder Optimierung von Kurvenscheibenfunktionen dienen.

Ein Computerprogramm und/oder ein Computerprogrammprodukt als Lösung der o.g. Aufgabe dient vorteilhaft zur Installation auf einer Recheneinheit, wobei das Computerprogrammprodukt zur Ausführung eines Verfahrens zum Betreib des technischen Systems gemäß einem der Ansprüche 1 bis 9 vorgesehen ist. Das Computerprogramm dient vorteilhaft zur Durchführung eines solchen Verfahrens, falls es auch einer Recheneinheit ausgeführt wird. Das durch den Ablauf des Computerprogramms des Verfahrens zum Betrieb eines technischen Systems erstellten, berechneten und/oder optimierten Bewegungsprofils oder Bewegungsprofile, insbesondere die zumindest eine so generierte Kurvenscheibenfunktion, dient/dienen zur Steuerung des technischen Systems. Das technische System kann die Daten auch mittels einer technischen Datenverbindung und due dessen Betrieb einsetzen.

Unter einer Recheneinheit wird ein PC, ein Computer der über ein lokales oder nicht lokales Netz mit dem technischen System verbunden ist, eine SPS, ein Notebook oder ein Macintosh-Rechner verstanden.

Zur Optimierung des zumindest einen Bewegungsprofils kann die das Bewegungsprofil in ein Funktional eingebettet. Die zumindest eine Bewegungsgleichung kann mit Hilfe der Methode der Variationsrechnung optimiert werden, insbesondere an ihre Randbedingungen angepasst werden.

Im Folgenden wird die Erfindung anhand von Figuren näher beschrieben und erläutert. Die in den Figuren gezeigten und beschriebenen Merkmale können, ohne das Wesen der Erfindung zu verlassen, miteinander kombiniert oder ggf. weggelassen werden. Es zeigen
FIG 1 ein Bewegungsprofil,
FIG 2 ein Verfahren zur Berechnung eines Bewegungsprofils,
FIG 3 einen Antrieb und mögliche Verlustparameter sowie
FIG 4 ein mögliches Verfahren zum Betrieb eines technischen Systems.

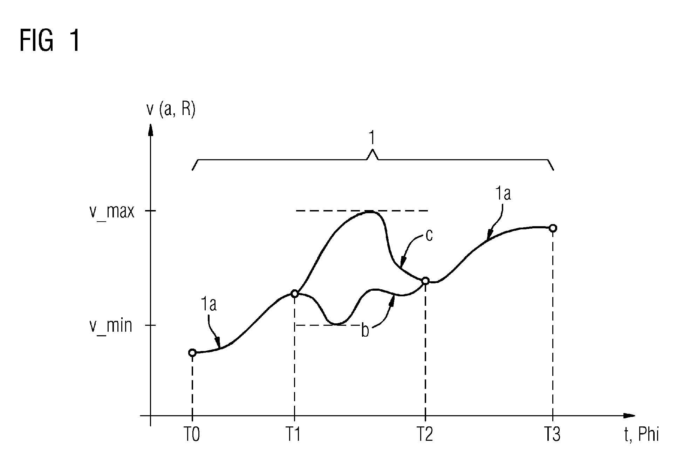

FIG 1 zeigt ein Bewegungsprofil 1. Das Bewegungsprofil ist eine Geschwindigkeit v (oder der Beschleunigung a oder des Rucks R) als Funktion der Zeit t. Das Bewegungsprofil 1 ist in drei Bereiche aufgeteilt, wobei die beiden äußeren Bereiche des Bewegungsprofils vorgegebene Bereiche des Bewegungsprofils 1a sind. Der erste Bereich des Bewegungsprofils 1, 1a beginnend zum Zeitpunkt T0 und verläuft bis zum Zeitpunkt T1. Ein zweiter Bereich des Bewegungsprofils 1 verläuft vom Zeitpunkt T1 bis zum Zeitpunkt T2. Ein dritter Bereich des Bewegungsprofils 1, 1a verläuft vom Zeitpunkt T2 bis zum Zeitpunkt T3. Das Bewegungsprofil 1 zwischen T1 und T2 ist nicht durch technische Vorgaben vorgegeben. Der Bereich des Bewegungsprofils 1 kann entlang verschiedenen möglichen Verläufen verlaufen. In der Figur sind zwei unterschiedliche Möglichkeiten für einen solchen möglichen Verlauf a, b gezeigt. In dem Beispiel kann der Bereich des Bewegungsprofils 1 zwischen dem Zeitpunkt T1 und den Zeitpunkt T2 durch ein Verfahren zum Betrieb eines technischen Systems TS ermittelt werden. Das Bewegungsprofil 1 in seiner Gesamtheit setzt sich durch die drei vorstehend ausgeführten Bereiche (im Zeitbereich zwischen T0 und T3) zusammen.

Das Bewegungsprofil 1 kann auch als Funktion einer Ausrichtung Phi anstelle von einer Funktion der Zeit definiert sein.

Es ist möglich, dass ein Bewegungsprofil 1 und/oder ein Bereich eines Bewegungsprofils 1 eine periodische Bewegung beschreibt.

Das Bewegungsprofil 1 beschriebt zum Beispiel den Drehzahlverlauf eines Antriebs A des technischen Systems TS als Funktion der Zeit t oder einer Ausrichtung Phi, insbesondere einer Ausrichtung Phi eines weiteren Antriebs A des technischen Systems TS.

Der Bereich des Bewegungsprofils zwischen den beiden Zeitpunktien T2 und T3 wird durch das Optimierungsverfahren Opt ermittelt bzw. berechnet. Als physikalische Randbedingung kommen eine minimale Geschwindigkeit v_min und/oder eine maximale Geschwindigkeit v_max und/oder eine minimale und/oder maximale Beschleunigung und/oder ein minimaler/maximaler Ruck in Frage. Weiter kann auch in einem noch nicht vorgegebenen Bereich des Bewegungsprofils 1 die Optimierung durch feste Vorgaben eingeschränkt sein.

Im Folgenden werden verallgemeinerte Koordinaten (Ruck R, Ausrichtungen Phi, Abstand, Geschwindigkeit v, Beschleunigung, ...) mit dem Bezugszeichen q_i bezeichnet. Die verallgemeinerten Variablen können von der Zeit, von einer Ausrichtung oder von einer weiteren verallgemeinerten Variablen abhängig sein. Der Terminus verallgemeinerte Variable ist dem Fachmann aus Literatur über klassische Mechanik wohlbekannt. Weiter sollen zeitliche Ableitungen derselben als verallgemeinerte Variable betrachtet sein.

Zur Berechnung eines oder mehreren Bewegungsprofilen 1, 1a kann es zweckmäßig sein, mehrere verallgemeinerte Variablen q_i in Ihrem Zusammenhang zu betrachten und/oder in Abhängigkeit voneinander zu betrachten. Um dies zu symbolisieren, werden die verallgemeinerte Variablen q_i in Funktionen V(q_i), P(q_i), Q(q_i) eingebettet, dargestellt. Die Funktionen können auch Funktionale (Funktionen von Funktionen) sein. Das Bewegungsprofil 1, 1a bzw. und/oder die Kurvenscheibenfunktion 1, 1a kann als Funktion zumindest einen verallgemeinerten Variable q_i als Funktion zumindest einer weiteren verallgemeinerten Variable q_i und/oder als Funktion der Zeit q_i(t) aufgefasst sein.

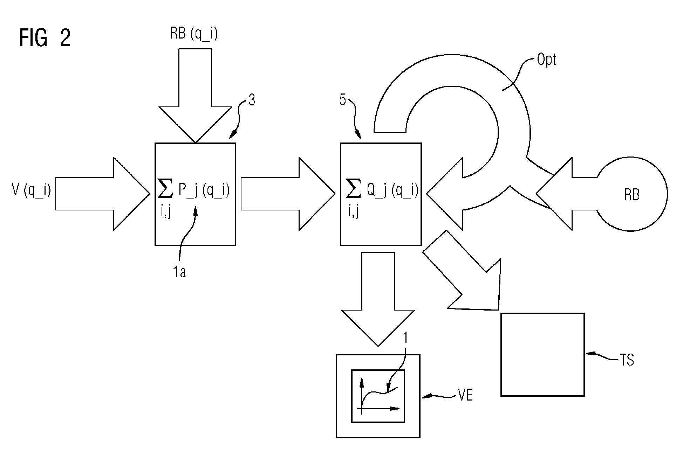

FIG 2 zeigt ein Verfahren zur Berechnung eines Bewegungsprofils 1. In einem ersten Schritt 3 wird das Bewegungsprofil 1 anhand von vorgegebenen Punkten V(q_i) oder vorgegebenen Bereichen V(q i), sowie optional anhand physikalischer Randbedingungen RB, zu einem vorläufigen Bewegungsprofil 1a zusammen gestellt wird. Das vorläufige Bewegungsprofil 1a in seiner Gesamtheit kann durch eine Summendarstellung von Funkionen P_j(q_i) dargestellt sein. Als Funktionen P_j eignen sich Polynome, ggf. in Kombination mit Trigonometrischen Funktionen P_j = Polynom * Sinus/Cos-Funktion. Als Polynome eignen sich insbesondere orthogonale Polynome oder Spline-Funktionen.

In einem weiteren Schritt 5 wird aus dem vorläufigen Bewegungsprofil 1a mit Hilfe des Optimierungsverfahrens Opt und unter Berücksichtigung der physikalischen Randbedingungen RB das optimierte Bewegungsprofil 1 erstellt. Hierbei ändern sich ggf. die Funktionen Q_j, ggf. jedoch nur in Ihrer Parametrierung.

Das Optimierungsverfahren Opt kann mehrmals durchlaufen werden, bis der gewünschte Grad der Optimierung des optimierten Bewegungsprofils 1 erreicht ist. Nach jedem Durchlauf kann das optimierte Bewegungsprofil 1 auf einer Visualisierungseinrichtung VE angezeigt werden. So kann ein Benutzer den Fortschritt des Optimierungsverfahrens begutachten und gegebenenfalls in das Optimierungsverfahren eingreifen, beispielsweise im Falle von Konvergenzproblemen der Optimierung. Das optimierte Bewegungsprofil 1 dient in zum Betrieb des technischen Systems TS. Das Verfahren zur Berechnung eines Bewegungsprofil 1 kann auf einer Recheneinheit RE oder einer Steuerungsvorrichtung des technischen Systems TS selbst (z. B. in einem Runtime-Modus einer SPS) installiert sein und/oder ablaufen.

Das Bewegungsprofil wird vorteilhaft sowohl als Funktion von verallgemeinerten Koordinaten q_i berechnet und/oder angezeigt. Verallgemeinerte Koordinaten q i sind beispielsweise der Ort eines Aktors, die Ausrichtung Phi eines Aktors oder eines Antriebes A, eine Geschwindigkeit v, eine Beschleunigung a, ein Ruck oder die Zeit t sein.

Das Optimierungsverfahren Opt kann beispielsweise das Bewegungsprofil in einem kleinen Bereich verändern, wobei die physikalischen Randbedingungen RB beachtet werden, und dann berechnen, ob diese Veränderung das Bewegungsprofil 1 in Einklang mit zumindest einer Ausrichtung des Optimierungsverfahrens Opt steht.

Mit dem gezeigten Verfahren können auch mehrere Bewegungsprofile 1, insbesondere für mehrere Antriebe A des technischen Systems TS gleichzeitig oder nacheinander berechnet werden. Ebenso können technische Vorgaben des technischen Systems 1 wie eine Bewegungsprofil eines weiteren Antriebs des technischen Systems 1 in das Verfahren eingehen.

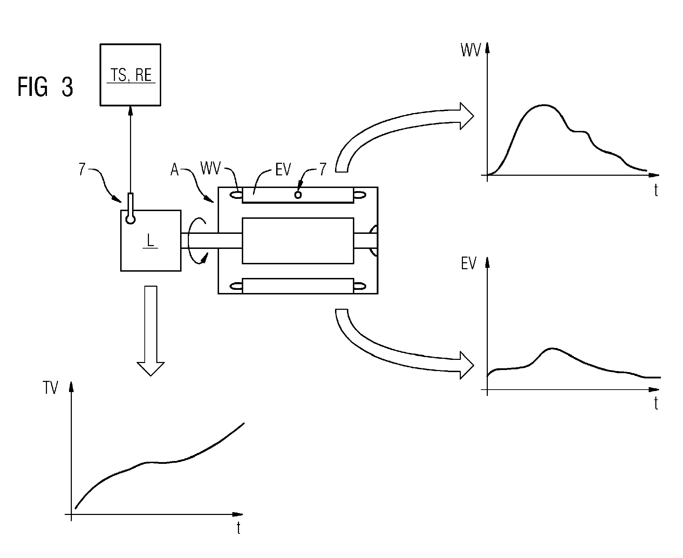

FIG 3 zeigt einen Antrieb und mögliche Verlustparameter WV, RV, WV, EV. Der Antrieb A weist mehrere Bereiche auf, an denen Verluste auftreten. Zum einen weist der gezeigte Antrieb A regelmäßig ein Blechpaket auf, wobei das Blechpaket durch Streufelder bei Betrieb des Antriebes A erwärmt wird. Die bei der Erwärmung des Blechpaketes durch Streufelder auftretenden Verluste werden als Eisenverluste EV bezeichnet. Die Eisenverluste sind in einem Diagramm als Funktion einer Zeit, insbesondere der Betriebszeit des Antriebs A aufgezeichnet.

Insbesondere durch den ohmschen Widerstand der Wicklung eines Antriebs A treten bei Stromfluss durch diese Wicklung Wickelverluste WV auf. Die Wickelverluste WV äußern sich ebenfalls durch einen Anstieg der Temperatur der Wicklung. Die Wickelverluste WV sind ebenfalls als Funktion einer Zeit t, insbesondere der Betriebszeit des Antriebs A oder des technischen Systems TS, anzeigbar und/oder speicherbar.

Mittels eines Sensors 7 oder mehreren Sensoren, die dem Antrieb und/oder dem technischen System TS zugeordnet sind, können die Verlustparameter bestimmt werden.

Ein solches Anzeigen oder Speichern einer Größe als Funktion einer Zeit wird auch als tracen (d. i. die Erstellung eines Trace) bezeichnet. Die gespeicherten Verlustparameter WV, EV, RV, insbesondere die Wickelverluste WV, Eisenverluste EV, Reibungsverluste RV oder ein sonstiger Verlustparameter können auch bereits gespeichert vorliegen. Besonders vorteilhaft sind die Verlustparameter, vorzugsweise als Trace, durch den Hersteller des Antriebs A oder des Technischen Systems TS ermittelt worden.

Der Antrieb A dient hier zum Antrieb einer Last L. Auch die Last L, insbesondere als einen Teil des technischen Systems TS weist vorteilhaft einen Sensor 7 auf. Als Sensor kann ein Thermoelement, ein Magnetfeldsensor, ein Reibungssensor, ein Beschleunigungssensor, ein Bewegungssensor, ein Rucksensor oder ein Sensor zur Bestimmung der Ausrichtung 7 dienen.

Die Verlustparameter WV, ER, RV können in das Optimierungsverfahren eingehen. Unter den Verlustparameter WV, EV, TV können skalare Größen oder abgespeicherte Traces der Verlustparameter WV, EV, TV gemeint sein. Insbesondere bei einer Minimierung des Energieverbrauchs ist die Berücksichtigung der Verlustparameter, ggf. als Trace, durch das Optimierungsverfahren sinnvoll.

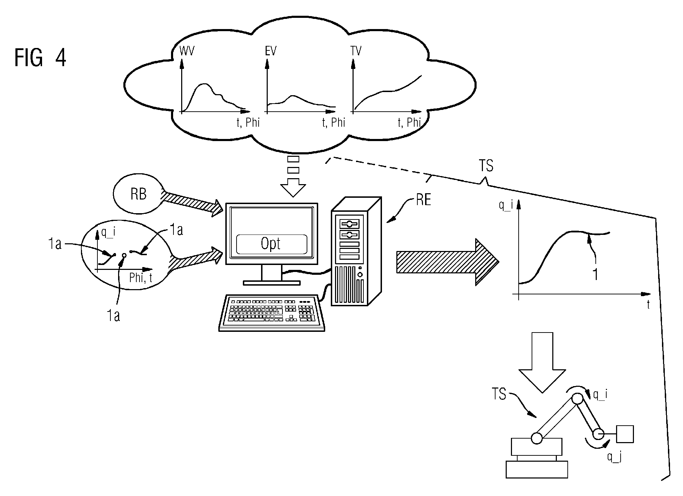

FIG 4 zeigt ein mögliches Verfahren zum Betrieb eines technischen Systems TS. Das technische System TS weist eine Recheneinheit RE auf, wobei die Recheneinheit zur Berechnung des optimierten Bewegungsprofils 1 vorgesehen ist. Zur Berechnung des optimierten Bewegungsprofils 1 wird ein vorläufiges Bewegungsprofil 1 vorgegeben. Weiter werden physikalische Randbedingungen RB vorgegeben. Optional können Verlustparameter WV, EV, TV als Funktion einer Zeit t, einer Ausrichtung Phi oder einer Position in die Berechnung des optimierten Bewegungsprofils 1 eingehen.

Die Recheneinheit RE berechnet aus den vorstehenden Ausführungen mit Hilfe des Optimierungsverfahrens Opt ein optimiertes Bewegungsprofil 1. Das optimierte Bewegungsprofil 1 ist als Funktion von zumindest einer verallgemeinerten Variable q_i (i=1,...N) angezeigt werden.

Das optimierte Bewegungsprofil 1 dient zur Bestimmung der Ausrichtung, der Drehzahl und/oder des Drehmoments von zumindest einem Antrieb A des technischen Systems. Dies ist in der Darstellung des Teils des technischen Systems TS unten rechts verdeutlicht. Die verallgemeinerte Variablen q i, q j bezeichnen hier Ausrichtungen Phi der Arme bzw. Aktoren eines Roboters, wobei der Roboter zumindest ein Teil des technischen Systems TS darstellt.

Besonders vorteilhaft orientieren sich die verallgemeinerten Variablen an Größen, Abständen, und Ausrichtungen Phi in Bezug zu zumindest einem Aktor, Bezugspunkt oder einer Last L des technischen Systems TS. Hierdurch kann eine besonders einfache und anschauliche Vorgabe und Analyse des Bewegungsprofils 1, 1a durch den Benutzer erfolgen.

Zusammenfassend betrifft die Erfindung ein Verfahren zum Betrieb eines technischen Systems TS, eine Vorrichtung und Verfahren zur Bestimmung eines Bewegungsprofils 1, Steuerungsvorrichtung sowie ein technisches System TS selbst. Dabei weist das technische System TS zumindest einen Antrieb A zur Bewegung zumindest einer Achse auf, wobei zumindest ein optimiertes Bewegungsprofil 1 der Achse mit Hilfe eines Optimierungsverfahrens Opt berechnet wird, wobei das Optimierungsverfahren Opt das optimierte Bewegungsprofil 1 anhand von vorgegebenen Punkten eines Bewegungsprofils 1a und/oder vorgegebene Bereichen des Bewegungsprofils 1a berechnet wird. Zur vereinfachten und besonders anschaulichen Benutzung gehen in das Optimierungsverfahren Opt physikalische Randbedingungen RB von Beginn des Optimierungsverfahrens Opt ein. So wird die die Benutzung und Einrichtung des technischen Systems TS durch den Benutzer anschaulicher gestaltet. Das optimierte Bewegungsprofil 1 dient zur Steuerung des zumindest einen Antriebs A des technischen Systems TS.

Gemäß einem Aspekt löst die Erfindung das Problem, dass die Produktivität eines Technischen Systems TS, insbesondere einer Maschine, dadurch begrenzt sein kann, dass einzelne Antriebe A an ihre thermische Maximalbelastung hinreichen. Die Ursache hierfür kann sein, dass eine Verbindung eines Bewegungsprofils 1, 1a, insbesondere der Kurvenscheibenfunktion 1, 1a (oft kurz als Kurvenscheiben 1, 1a bezeichnet), welche die Bewegung der zumindest einen Achse/eines Antriebs A in Abhängigkeit einer weiteren Achse/eines Antriebs A, insbesondere einer Leitachse, definiert.

Bei komplexen technischen Systemen TS, insbesondere einer Maschine oder einer Produktionsmaschine, ist es derzeit nicht möglich, die kritischen Bereiche des Bewegungsprofils 1, 1a bzw. der Kurvenscheibe 1, 1a zu identifizieren, welche zu dieser, insbesondere thermischer, Maximalbelastung führen. Die thermische Maximalbelastung kann auch eine physikalische Randbedingung RB sein, insbesondere eine physikalische Randbedingung RB mit einer Abhängigkeit der Zeit t und/oder der Ausrichtung Phi.

Eine Verbesserung der oben genannten Problemstellung ist derzeit nur durch Versuch und Irrtum möglich.

Daher ist es eine Idee der Erfindung, mittels der Erstellung eines Traces (bzw. Tracefunktion) das Aufzeichnen der steuerungsseitig bekannten Größen, insbesondere Messgrößen, und deren mathematischen Verknüpfungen aufzuzeigen aufzuzeichnen bzw. abspeichern. Moderne Steuerungsvorrichtungen, beispielsweise eine Steuerungsvorrichtung SIMOTION oder SIMATIC der Firma Siemens AG, weisen in der Regel eine solche Funktionalität zur Aufzeichnung, Bearbeitung und Speicherung auf.

Bei einem technischen System TS, insbesondere bei einer realen Maschine TS (im Vergleich zu einer Maschine, die nur im Rahmen eines Engineering-Programms simuliert wird), können so die Bewegungen, die durch die Antriebe A initiiert werden, durch einen Trace abgebildet und ggf. verarbeitet, insbesondere visualisiert, werden.

Insbesondere hinsichtlich der Erwärmung des zumindest einen Antriebs A lässt sich so eine thermische Belastung des Antriebs A als Funktion der Zeit aufzeichnen, ermitteln und/oder auswerten.

Als ein Aspekt dieser Erfindung werden aus ermittelten bzw. vorgebbaren Größen, insbesondere des zumindest den Trace, und/oder den bekannten Kenngrößen von einzelnen Komponenten des technischen Systems TS (Umrichter, Antrieb A, mechanische Elemente) Verlustwerte rechnerisch bestimmen und/oder mit Hilfe eines (internen) Verlustmodells bestimmen bzw. aufzeichnen.

Die Verluste können beispielsweise für folgende Kategorien bestimmt werden:
Antriebsverluste wie die Verluste durch den ohmschen Widerstand der Wicklungen des zumindest einen Antriebs A (Stromwärme) sowie so genannte Eisenverluste EV. Unter einem Eisenverlust wird eine Erwärmung des Blechpaketes des zumindest einen Antriebs A verstanden, welches durch magnetische Streufelder entsteht.

Weiter können auch die Verluste des Umrichters oder weiterer technischer bzw. elektronischer Komponenten, insbesondere des technischen Systems TS, in die Berechnung der Verluste mit eingehen. Beispielhaft ist der Verlust des Umrichters die Verlustleistung des Umrichters, berechnet als Leistungsausgabe des Umrichters (für den Antrieb A) multipliziert mit einer Kenngröße für den Verlust des Umrichters.

Insbesondere für kundenspezifische Verlustmodelle, beispielsweise von einer bestehenden Maschine oder eines geplanten/ realen technischen Systems TS ist eine vorteilhafte Anwendung der Erfindung.

Der Benutzer eines technischen Systems TS kann mit den vorstehend erläuterten Aspekten der Erfindung kritische Bereiche in Bezug auf Energieverbrauch und/oder der Wärmeabgabe des technischen Systems TS oder der einzelnen Antriebe A erkennen und anhand der Informationen das zumindest eine Bewegungsprofil 1, 1a bzw. der zumindest einen Kurvenscheibenfunktion 1, 1a den Erfordernissen nach (wie verlustminimal, zeitminimal, schwingungsminimal, reibungsminimal) optimieren.

Vorteilhaft können aus den vorstehenden bekannten Größen (Eigenschaften des Antriebs A und des Umrichters) die Verluste rechnerisch bzw. mittels des so genannten Verlustmodells, insbesondere in einem Trace, bestimmt bzw. aufgezeichnet werden.

Als Verlustmodell können eine rechnerische Gewichtung der thermischen Verluste des Antriebs bei Betrieb, insbesondere als Funktion der Zeit, die thermischen Verluste des Umrichters (und/oder weiterer elektronischer Komponenten) sowie Bearbeiter-spezifische bzw. des technischen Systems spezifische Verlustmodelle (z.B. die Reibung betreffend) eingehen.

Vorteilhaft ist an dem vorstehend ausgeführten Aspekt der Erfindung:
- eine Transparenz des Energieverbrauchs, insbesondere bei komplexen technischen Systemen TS und Anlagen,
- eine Identifizierung kritischer Bereiche, insbesondere in Bezug auf Energieverbrauch und Erwärmung von Komponenten,
- daraus ergebend eine Möglichkeit zur Optimierung der Bewegungsprofile, insbesondere von Kurvenscheibenfunktionen 1, 1a,
- Einsatz von Bewegungsprofilen 1, 1a, bzw. von Kurvenscheibenfunktionen die einen besonders energiesparenden Betrieb des zumindest einen Antriebs bzw. des technischen Systems erlauben.

Gemäß einem weiteren Aspekt der Erfindung werden Bewegungsprofile 1, 1a, insbesondere Kurvenscheibenfunktionen 1, 1a, durch norminerte Funktionen P_i, Q_i, q_i (in der Regel Polynome) definiert. Somit werden bislang Bewegungsprofile 1, 1a bzw. Kurvenscheibenfunktionen 1, 1a durch Zusammenstellung aus solchen normierten Funktionen P_i, Q_i (oder q_i(t)) erstellt.

Bislang werden die Verträglichkeit der so erstellten Bewegungsprofile 1, 1a bzw. Kurvenscheibenfunktionen 1, 1a in einem "geometrischen Raum" generiert. Bislang werden die Verträglichkeit der Bewegungsprofile mit physikalischen Randbedingungen RB (z.B. maximale Beschleunigung, maximale Geschwindigkeit, maximaler Ruck) erst nach einer Erstellung eines Bewegungsprofils 1, 1a bzw. der Kurvenscheibenfunktion 1, 1a mit Hilfe des CAM-Tools sichergestellt. Werden die physikalischen Randbedingungen RB für eine vorgesehene Geschwindigkeit einer Achse, die durch einen Antrieb A bewegt wird, verletzt, so ist gemäß der physikalischen Randbedingungen RB die Geschwindigkeit entsprechend zu reduzieren. Bislang werden oft anhand vorher festgelegter Bereiche (normierte Bereiche) die Bewegungsprofile 1, 1a bzw. der Kurvenscheibenfunktion 1, 1a so lange variiert, bis die physikalischen Randbedingungen RB eingehalten werden. Hierbei können unter Beachtung von einzelnen vorgegebenen Punkten (die z.B. zwischen festgelegten Bereichen einer (nicht optimierten) Kurvenscheibenfunktion 1a bzw. eines (nicht optimierten) Bewegungsprofils 1a definiert werden. Weiter können aus diesen Bewegungsprofile 1, 1a oder Kurvenscheibenfunktionen 1, 1a Punkte oder Bereiche festgelegt bzw. dergestalt eingefügt werden, so dass diese die physikalischen Randbedingungen RB einhalten, insbesondere nach dem zumindest einen Durchlauf des Optimierungsverfahrens Opt. Mit anderen Worten beeinflussen die Zwischenpunkte die Optimierung der Kurvenscheibenfunktion 1, 1a bzw. das Bewegungsprofil 1, 1a nach der Optimierung (das ist insbesondere der Durchlauf des Optimierungsverfahrens Opt).

Es ist bislang Stand der Technik, dass eine Generierung/Berechnung eines Bewegungsprofils 1, 1a bzw. einer Kurvenscheibenfunktion 1, 1a nachteilhaft mit Hilfe eines umständlichen interaktiven Prozesses erfolgt, welcher nicht stetig zu einem Optimum führt. Zudem ist ein Verlustmodell bei der Planung von Bewegungsprofilen 1, 1a bzw. Kurvenscheibenfunktion 1, 1a nicht berücksichtigbar.

Gemäß einem weiteren Aspekt der Erfindung wird vorgeschlagen, mit Hilfe eines Engineering Programms (bzw. einem Engineering Tool) die Definition der Kurvenscheiben 1, 1a bzw. des Bewegungsprofils 1, 1a zu erleichtern und zu veranschaulichen. Hierzu erfolgt die Definition und die Optimierung des Bewegungsprofils 1, 1a bzw. der Kurvenscheibenfunktion 1, 1a in einem so genannten "physikalischen Raum", d.h., dass die physikalischen Randbedingungen RB gleich unmittelbar in die Erstellung und das Optimierungsverfahren Opt des Bewegungsprofils 1, 1a bzw. der Kurvenscheibenfunktion 1, 1a eingehen. Somit werden die physikalischen Randbedingungen RB (maximale Geschwindigkeit, maximale Beschleunigung, oder maximaler Ruck) direkt beachtet. Die Kurvenscheibenfunktion 1, 1a bzw. das Bewegungsprofil 1, 1a wird mit Hilfe des hier beschriebenen Verfahrens, insbesondere mit Hilfe des Optimierungsverfahrens Opt, automatisch generiert, ohne dass der Einsatz eines CAM-Tools notwendig ist. Hierbei kommen Optimierungsverfahren Opt vorteilhaft zum Einsatz, welche gemäß Optimierungskriterien die Kurvenscheibenfunktion 1, 1a bzw. das Bewegungsprofil 1, 1a ausrichten. Optimierungskriterien können sein:
1. Zeitoptimale Optimierung
2. Verlustminimale Optimierung
3. Vermeidung einer Schwingungsfrequenz bei bestimmten Geschwindigkeiten bzw. Beschleunigungsverläufe der Leitachse.

Eine Optimierung des Bewegungsprofils 1, 1a bzw. der Kurvenscheibenfunktion 1, 1a erfolgt beispielsweise unter Berücksichtigung von Bewegungsprofilen und/oder an Achskonfigurationen bzw. an Antriebskonfigurationen.

Die Erfindung kann beispielsweise als ein Engineering-Tool zur Optimierung von Bewegungsprofilen 1, 1a und/oder Kurvenscheibenfunktionen 1, 1a ausgeführt sein.

Zur Berücksichtigung verschiedener Optimierungskriterien (zeitminimaler Durchlauf, verlustminimaler Durchlauf, Durchlauf mit möglichst geringen thermischen Verlusten) können mit jeweils einer oder mehreren Optimierungsverfahren Opt als Teil des Engineering-Programms die zumindest eine Kurvenscheibenfunktion 1, 1a bzw. das zumindest eine Bewegungsprofil 1, 1a erstellt und/oder optimiert werden.

Eine Erstellung und/oder die Optimierung der Kurvenscheibenfunktion können auch direkt im Laufzeitsystem der Steuerungsvorrichtung bzw. im Laufzeitsystem einer SPS erfolgen.

Vorteilhaft erhält der Benutzer eine vereinfachte und übersichtlichere Möglichkeit Bewegungsprofile bzw. Kurvenscheiben zu erstellen. Eine Berechnung, Erstellung und/oder Optimierung der Kurvenscheibenfunktion 1, 1a bzw. des Bewegungsprofils 1, 1a sowie die Plausibilitätsprüfung anhand der physikalischen Randbedingungen erfolgt bei der Erfindung in einem Engineering-System bzw. in einer Steuerungsvorrichtung / SPS.

## Patentansprüche

1. Verfahren zum Betrieb eines technischen Systems (TS), wobei das technische System (TS) zumindest einen Antrieb zur Bewegung zumindest einer Achse aufweist, wobei zumindest ein optimiertes Bewegungsprofil (1) der Achse mit Hilfe eines Optimierungsverfahrens (Opt) berechnet wird, wobei das Optimierungsverfahren (Opt) das optimierte Bewegungsprofil (1) anhand von vorgegebenen Punkten eines Bewegungsprofils (la) und/oder vorgegebene Bereichen des Bewegungsprofils (la) berechnet,
**dadurch gekennzeichnet, dass**
- dass in das Optimierungsverfahren (Opt) physikalische Randbedingungen (RB) eingehen,
- und dass das optimierte Bewegungsprofil (1) zur Steuerung des zumindest einen Antriebs (A) des technischen Systems (TS) dient.

2. Verfahren nach Anspruch 1, wobei das Optimierungsverfahren (Opt) das Bewegungsprofil (1, 1a) zur Minimierung eines Energieverbrauchs des zumindest einen elektrischen Antriebs (A), zur Minimierung einer Zeit (t) für einen Durchlauf des Bewegungsprofils (1) und/oder zur Verminderung von Schwingungen in dem technischen System (TS) ausgerichtet wird.

3. Verfahren nach Anspruch 1 oder 2, wobei das technische System (TS) zumindest einen zweiten Antrieb (A) zur Bewegung einer zweiten bewegbaren Achse aufweist.

4. Verfahren nach Anspruch 3, wobei die zweite bewegbare Achse gemäß einem zweiten Bewegungsprofil (1) bewegt wird, wobei das erste Bewegungsprofil (1) und das zweite Bewegungsprofil (1) miteinander verknüpft sind.

5. Verfahren nach einem der vorangehenden Ansprüche, wobei das Bewegungsprofil (1, 1a) und/oder das optimierte Bewegungsprofil (1) eine Kurvenscheibenfunktion (1) ist.

6. Verfahren nach einem der Ansprüche 3 bis 5, wobei für die erste Achse und die zumindest eine weitere Achse des technischen Systems (TS) jeweils ein optimiertes Bewegungsprofil (1) berechnet wird.

7. Verfahren nach einem der vorangehenden Ansprüche, wobei das Optimierungsverfahren (Opt) in mehreren Durchläufen aus vorgegebenen Punkten und/oder vorgegebenen Bereichen eines Bewegungsprofil (la) ein optimiertes Bewegungsprofil (1) berechnet und wobei das Bewegungsprofil (1) nach jedem Durchlauf des Optimierungsverfahrens (Opt) durch eine Visualisierungseinrichtung (VE), insbesondere des technischen Systems (TS), angezeigt wird.

8. Verfahren nach einem der Ansprüche 2 bis 7, wobei zur Berechnung eines optimierten Bewegungsprofils (1) anhand der Minimierung des Energieverbrauchs baulich bedingte Verlustparameter (WV, EV, RV) des Antriebs als Randbedingungen (RB) eingehen.

9. Verfahren nach Anspruch 8, wobei eine Darstellung der Verlustparameter (WV, EV, RV) auf der Visualisierungseinrichtung (VE) erfolgt.

10. Verfahren nach einem der vorangehenden Ansprüche, wobei als Optimierungsverfahren (Opt) ein Newton-Verfahren, ein SQP-Verfahren, ein Lagrange-Newton-Verfahren, ein Runge-Kutta-Verfahren und/oder ein Simplex-Verfahren verwendet werden.

11. Vorrichtung zur Bestimmung eines Bewegungsprofils (1) oder mehrerer, insbesondere miteinander verknüpfter, Bewegungsprofile (1), insbesondere einer Kurvenscheibenfunktion (1), wobei die Vorrichtung eine Recheneinheit (RE), optional eine Visualisierungseinrichtung (VE), zumindest eine Schnittstelle zur Verbindung mit einem Antrieb und/oder eine Schnittstelle zur Verbindung der Vorrichtung mit einem technischen Systems (TS) aufweist, wobei die Vorrichtung zur Durchführung eines Verfahrens nach einem der vorangehenden Ansprüche vorgesehen ist.

12. Steuerungsvorrichtung für ein technisches System (TS), wobei die Steuerungsvorrichtung zur Berechnung eines optimierten Bewegungsprofils (1), insbesondere einer Kurvenscheibenfunktion (1), für eine bewegliche Achse oder mehrerer, insbesondere miteinander verknüpfte, optimierten Bewegungsprofile (1) für mehrere bewegliche Achsen vorgesehen ist, wobei zur Berechnung des zumindest einen optimierten Bewegungsprofils (1) zumindest ein Optimierungsverfahren (Opt) vorgesehen ist, wobei das Optimierungsverfahren (opr) zur Berechnung des optimierte Bewegungsprofils (1) anhand von vorgegebenen Punkten eines Bewegungsprofils (a1) und/oder vorgegebene Bereichen des Bewegungsprofils (la) vorgesehen ist, **dadurch gekennzeichnet, dass** in das Optimierungsverfahren (Opt) physikalische Randbedingungen (RB) eingehen und wobei das zumindest eine optimierte Bewegungsprofil (1) zur Vorgabe der Bewegung zumindest einen Antriebes (A) in einem technischen System (TS) vorgesehen ist.

13. Steuerungsvorrichtung nach Anspruch 12, **dadurch gekennzeichnet, dass** das Optimierungsverfahren (Opt) zur Optimierung des Bewegungsprofils (1)
- zu einer Minimierung eines Energieverbrauchs zumindest eines elektrischen Antriebs eines technischen Systems,
- zur Minimierung einer Zeit für einen Durchlauf des Bewegungsprofils
- und/oder zur Verminderung von Schwingungen in dem technischen System vorgesehen ist.

14. Technisches System (TS), aufweisend eine Vorrichtung nach Anspruch 10 und/oder eine Steuerungsvorrichtung gemäß einem der Ansprüche 12 oder 13.

15. Computerprogrammprodukt zur Installation auf einer Recheneinheit, wobei das Computerprogrammprodukt zur Ausführung eines Verfahrens gemäß einem der Ansprüche 1 bis 10 vorgesehen ist.
